Europäisches Patentamt

European Patent Office

Office européen des brevets

(19)

(11) Publication number: **0 393 296**

**A1**

# (12) EUROPEAN PATENT APPLICATION

(21) Application number: **89830178.3**

(22) Date of filing: **21.04.89**

(51) Int. Cl.5: **B29C 67/18**

(43) Date of publication of application:
**24.10.90 Bulletin 90/43**

(84) Designated Contracting States:
**AT DE ES FR GB IT SE**

(71) Applicant: **Benedetti, Marcello**
**Via Pian Due Torri, 25**
**I-00146 Roma(IT)**

(72) Inventor: **Benedetti, Marcello**
**Via Pian Due Torri, 25**
**I-00146 Roma(IT)**

(74) Representative: **Mascioli, Alessandro, Prof.Dr.**
**c/o A.N.D.I. Associazione Nazionale degli**
**Inventori Via Urbana, 20**
**I-00184 Roma(IT)**

(54) An automatic, high frequency and thermocontact welding machine for the realization of polypropylene cards.

(57) The machine according to the present invention consists in a plurality of elements provided in succession for the automatic shaping of cards obtained from polypropylene sheets, folded and shaped, by means of high frequency and thermocontact welding.

EP 0 393 296 A1

## An automatic, high frequency and thermocontact welding machine for the realization of polypropylene cards

The present invention concerns an automatic machine provided for the high frequency as well as for the thermocontact welding, both necessary for the realization in series of cards obtained from sheets of polypropylene being folded and shaped, with pincers also out of rolled plastic.

Cards like those mentioned above are the object of a precedent patent application in the name of the same applicant and filed on 14th November 1988 with serial no. 36015B/88.

It is the aim of the present invention to realize a machine for the automatic production, in a continuous succession of operations, of said cards being complete in every detail.

The aim set forth is reached by means of the machine according to the present invention, in which the welding is performed under high frequency of by thermocontact, while the folding are obtained only by thermocontact.

For obtaining a machine responding to the requests mentioned, the machine according to the present invention is provided with the following elements:

- a trestle C for unrolling the two working rolls R and car rying also the two reserve rolls;

- a dancing roller 1 with rotoric draught for the regulation of the transport speed of the plastic material sheet coming from rotors R;

- two longitudinal cutting devices 2 with orientable blades placed at adjustable distances;

- a three-phase current motor 3 operated by a static frequency variator with the operating of a shaft on which three disc cams are mounted;

- a puncher for the realization of the holes on the card for the introduction of resilient tongues, said puncher being pneumatically operated;

- punchers 5 for realizing the incisions, being pneumatically operated;

- heating presses 11 that reach a maximum temperature of $200°$ C, being pneumatically operated, heating on both sides for heating up the edge to be folded;

- an advancing trolley on which two fixing pincers 7, pneumatically operated, are mounted for the transport, step by step, of the sheet of material through the various working steps;

- a portal welding press 6 with heating plates with a bimetal thermostat for a working temperature of about $60°$ - $200°$ C, onto which the dies' plate is fixed;

- an ironing device 13;
- a puncher 12 for rounding the corners;
- a plurality of transport rollers 14;
- a transversal stripes puncher 8, being pneumatic and adjustable in the advancing sense and provided for receiving a whole of replaceable column guides;
- a folding and closing station 9 for folding the back of the cards, provided in the lower part thereof with heating plates and with a transport belt for the stapling in scales;
- a catapult belt 10 with a stapling device, where the envelopes, being finished and separated by the transversal cutter, are transported by an upper belt, having a quicker motion and being operated by a motor, against a deflecting blade, from which said envelopes fall vertically downwards into a stapling drawer of the transversal transporter 15 that is cyclically moving;
- a complete electric system comprising a motor with automatic regulation of the frequency and with a programmable controller;
- a complete pneumatic system for the centralization of the expelled air so as to reduce the phonic level;
- a centralized lubrification with manual operation; - a cooling device.

In a possible variant according to the present invention, said machine may further comprise:
- an equipment for high frequency welding with a 2 KW generator;
- an equipment for thermocontact weldings;
- a preparation for an electricity 3 x 380 V, 50 Hz, 524 KVA.

For what concerns the functioning, the transport system of the machine consists in an endless belt running on support rollers provided with pin bearings.

The belt is of polyammide the jointing thereof at $45°$ is obtained with two special adhesive tapes being heat-resistant.

The transport belt is cyclically moved together with the sheet through the stations of the machine by means of advancing pincers 7. The polyammide belt prevents the sheet from getting sticked to the welding die continuously heated.

After the welding operagion the sheet remains resting on the transport belt and remains there also during the cooling operation.

The dancer roller 1 provides for a nearly uniform tension of the material during the passage through the single working stations of the automatic machine.

An axial movement of the rollers (working rolls) takes place by means of a hand-wheel and a threaded rod.

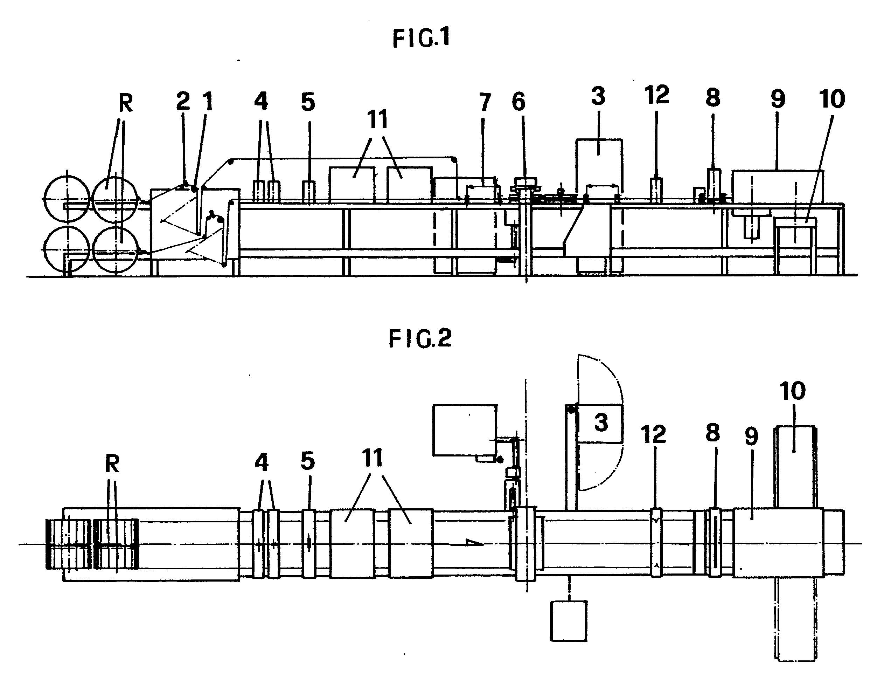

## Claims

1. An automatic, high frequency and thermocontact welding machine, equipped for the realization of cards of polypropylene, characterized in:
- a trestle C for unrolling the two working rolls (R) and carrying also the two reserve rolls;
- a dancing roller (1) with rotoric draught for the regulation of the transport speed of the plastic material sheet coming from rotors (R);
- two longitudinal cutting devices (2) with orientable blades placed at adjustable distances;
- a three-phase current motor (3) operated by a static frequency variator with the operating of a shaft on which three disc cams are mounted;
- a puncher for the realization of the holes on the card for the introduction of resilient tongues, said puncher being pneumatically operated;
- punchers (5) for realizing the incisions, being pneumatically operated;
- heating presses (11) that reach a maximum temperature of 200°C, being pneumatically operated, heating on both sides for heating up the edge to be folded;
- an advancing trolley on which two fixing pincers (7), pneumaticlaly operated, are mounted for the transport, step by step, of the sheet of material through the va rious working steps;
- a portal welding press (6) with heating plates with a bimetal thermostat for a working temperature of about 60° - 200°C, onto which the dies' plate is fixed;
- an ironing device (13);
- a puncher (12) for rounding the corners;
- a plurality of transport rollers (14);
- a transversal stripes puncher (8), being pneumatically and adjustable in the advancing sense and provided for receiving a whole of replaceable column guides;
- a folding and closing station (9) for folding the back of the cards, provided in the lower part thereof with heating plates and with a transport belt for the stapling inscales;
- a catapult (10) with a stapling device, where the envelopes, being finished and separated by the transversal cutter, are transported by an upper belt, having a quicker motion and being operated by a motor, against a deflecting blade, from which said envelopes fall vertically downwards into a stapling drawer of the transversal trasporter (15) that is cyclically moving".

2. An automatic welding machine according to claim 1, characterized in:
- a complete electric system comprising a motor with automatic regulation of the frequency and with a programmable controller;
- a complete pneumatic system for the centralization of the expelled air so as to reduce the phonic level;
- a centralized lubrification with manual operation;
- a cooling device.

3. An automatic welding machine according to claim 1, characterized in:
- an equipment for high frequency welding with a 2 KW generator;
- an equipment for thermocontact weldings;
- a preparation for an electricity of 3 x 380 V, 50 Hz, 24 KVA.

4. An automatic welding machine according to claim 1, characterized in that the transport system consists in an endless belt rolling on support rollers provided with pin bearings.

5. An automatic welding machine according to claim 1, characterized in that the dancing roller (1) creates a tension of the material being nearly uniform during the passage through the single working stations of said automaticamachien.

FIG.1

FIG.2

| | European Patent Office | EUROPEAN SEARCH REPORT | Application Number |
|---|---|---|---|

EP 89 83 0178

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 278 818 (TECHN. INDUSTRIELLES DE PLASTIFICATION) * Whole document * ----- | 1 | B 29 C 67/18 |
| | | | TECHNICAL FIELDS SEARCHED (Int. Cl.5) |
| | | | B 29 C<br>B 31 B<br>B 42 D |

The present search report has been drawn up for all claims

| Place of search | Date of completion of the search | Examiner |
|---|---|---|
| THE HAGUE | 22-12-1989 | RIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)